# EUROPEAN PATENT APPLICATION

(11) **EP 2 096 585 A1**
(43) Date of publication of application: **02.09.2009**
(21) Application number: 07832380.5
(22) Date of filing: 22.11.2007
(51) Int. Cl.: G06N 5/04

(54) **ACTIVE STUDYING SYSTEM, ACTIVE STUDYING METHOD AND ACTIVE STUDYING PROGRAM**

(30) Priority: 11.12.2006 JP 2006332983
(71) Applicant: NEC Corporation, Minato-ku Tokyo 108-8001 (JP)
(72) Inventor: YAMASHITA, Yoshiko, Tokyo 108-8001 (JP); KUROIWA, Yukiko, Tokyo 108-8001 (JP); ASOGAWA, Minoru, Tokyo 108-8001 (JP)
(74) Representative: Reeve, Nicholas Edward
(86) International application number: PCT/JP2007/072651
(87) International publication number: WO 2008/072459

(57) **Abstract**

In order to carry out a learning in which newly acquired data is taken to be more important than data previously accumulated, a function is provided which sets a weight for learning data based on an acquisition order of the learning data. Furthermore, in order to carry out a learning which reflects data acquired in the last cycle and a result with respect to the data, a function is provided which feeds back a result of a learning in the last cycle to a rule and sets a weight for learning data based on a relation between a label of data and a prediction value.

## Description

### Technical Field

The present invention relates to an active learning system, and more particularly relates to an active learning system of machine learning. This application is based upon and claims the benefit of priority from Japanese Patent Application No. 2006-332983, filed on December 11, 2006, the disclosure of which is incorporated herein in its entirely by reference.

### Background Art

An active learning is one type of machine learning, in which a learner (computer) can actively select learning data. In the active learning, a cycle of (1) experiment → (2) learning of results → (3) selection of objects of next experiment → (1) experiment is repeated, thereby enabling the reduction in total amount of experiments. The (2) and (3) are carried out by the computer. The active learning is a method to obtain many results from small number or amount of experiments, and is employed in an experimental design to design appropriately experiments which require a lot of cost and a long time. A computer system employing the active learning attracts attentions as a technique suitable for, for example, a drug screening for discovering compounds having activity for a specific protein from enormous variety of compounds, and is hereinafter referred to as an active learning system.

The data (learning data) used in the active learning system is represented by a plurality of descriptors (properties) and one or more labels. The descriptor characterizes a structure and the like of the data, and the label indicates a state with respect to an event of the data. For example, in a case of a drug screening employing the active learning, presence or absence of a partial structure such as benzene ring is described by a bit string of 0/1 in each piece of compound data or each piece of compound data is represented by a plurality of descriptors that describe various physicochemical constants such as molecular weight. Also, the label is used to indicate, for example, the presence or absence of an activity for a specific protein. When values being able to be taken by the label are discrete values such as presence of activity or absence of activity, those are referred to as classes. On the other hand, when values being able to be taken by the label are continuous values, those are referred to as function values. In short, the label includes classes or function values.

Among plurality of pieces of learning data as a set of learning data, learning data in which a value of label is known (the label is set) is referred to as a known learning data group, and learning data in which a value of label is unknown (the label is not set) is referred to as an unknown learning data group. In the active learning system, the first learning is carried out by using the known learning data. Learning data of the known learning data group, which is valuable to a user and referred to as "a positive example" (positive example learning data), is discriminated from learning data of the known learning data group, which is not valuable to the user and referred to as "a negative example" (negative example learning data). Then, the active learning system carries out learning by using both of the positive example learning data and the negative example learning data that are selected from the known learning data group. The positive example or the negative example is determined by a value of the label of which the active learning system takes notice. When the value of the noticed label takes two values, the value noticed by the user indicates a positive example and the unnoticed value indicates a negative example. For example, when labels indicate presence or absence of the activity for a specific protein and when compounds having activity for the protein are noticed, a label of which a value indicates presence of the activity indicates positive example and a label of which a value indicates absence of the activity indicates a negative example. By the way, when a label takes multiple values, one or more values noticed by the active learning system indicate positive examples and all of the other values indicate the negative examples. Also, when values being able to be taken by a label are continuous values, data of which a label value is close to a value noticed by the active learning system is a positive example, and, data of which a label value is not close to the value is a negative example.

The active learning system selects arbitrary known learning data from the known learning data group, applies an ensemble learning (a method to carry out a prediction by integrating a plurality of learning machines) to the selected data, and generates (learns) a rule for generating a rule to discriminate whether positive example learning data or negative example learning data with respect to the learning data by using positive and negative examples. The rule represents an assumption or a theory for discriminating, when descriptors of an arbitrary known learning data are inputted, whether a value of label of the learning data is a noticed value or not, in other words, whether the data is a positive example or a negative example. As typical ensemble learning methods, there are a bagging and a boosting.

The bagging is one of ensemble learning methods, in which each learning machine carries out learning by using different learning data groups generated by carrying out re-sampling of data from a database of the same known case examples, and is a method to predict a class of an unknown case example based on a majority vote for prediction values with respect to those.

The boosting is a learning algorism for making a judgment rule of excellent performance by successfully integrating a plurality of different judgment rules. Actually, the integrated judgment rule indicates a weighted majority voting rule based on scores which are given to the respective judgment roles. The scores will be described later. This is referred to as boosting because increase and decrease in the scores are repeated in the course of the learning.

The active learning system carries out learning with respect to an arbitrary known learning data of the known learning data group and generates a rule with respect to the arbitrary known learning data. The rule is applied to a candidate learning data group as the unknown learning data group to predict values of labels of the candidate learning data group. That is, whether positive example learning data or not is predicted with respect to the candidate learning data group to generate prediction results. The prediction results are quantitatively indicated as numeral values referred to as scores. The scores are numeral values indicating likelihood of being positive example with respect to the candidate learning data group and the larger scores indicate the higher probabilities of being positive example. The active learning system selects selected candidate learning data representing learning data to be objects of learning from the candidate learning data group based on the prediction results with respect to the candidate learning data group and outputs the selected data. As methods for the selection, there are several methods including: a method in which data for which scattered predictions are made is selected; a method in which selection is carried out in the order of the scores; a method in which selection is carried out by using a certain function; and the like.

Since a value of label of the selected candidate learning data is unknown, an actual value of the label is obtained through an experiment or investigation and fed back to the active learning system. The active learning system sets the label for the selected candidate learning data, eliminates the selected candidate learning data from the candidate learning data group, adds the selected candidate learning data as known learning data to the known learning data group, and repeats again the same operation as described above. The repetition of such process is continued until a predetermined termination condition is satisfied.

Consequently, the active learning system can be used as a technique for discovering positive examples through a small amount of experiment and in a short time. For example, as mentioned above, in the drug screening, the compound having activity for the specific protein is discovered from the enormous variety of compounds. In this case, inactive compounds (negative examples) are majorities and a number of the active compounds (positive examples) is very small. In this way, even in the case that the numbers of the positive examples and the negative examples are largely different, the active compounds (positive examples) can be discovered in a short time through experiments for a small number of compounds.

However, the following problems exist in conventional techniques.

As a first problem, previously-accumulated known learning data and newly-added known learning data of the known learning data group are equally treated by the active learning system. Thus, a rule with respect to the previously-accumulated known learning data and a rule with respect to the newly-added known learning data are not different so much. As for the foregoing active learning system, the addition of new known learning data to the previously-accumulated known learning data provides no conspicuous advantage.

In this way, in the foregoing active learning system, there is no difference in the rules. Thus, a learning efficiency for learning the next rule by using the rule is not improved. In particular, in a field such as drug screening, in which a cost to obtain values of unknown labels through experiments is expensive, a learning cost will be extremely high.

By the way, as a related technique, a learning system is disclosed in Japanese Laid Open Patent Application (JP-P 2005-107743A).

In this conventional technique, a learning unit of a data processing unit inputs learning data, a low-order learning algorism and a termination condition through operations of an input device by a user. The learning data is data in which a label (class or function value) is set. The low-order learning algorism is a computer program for carrying out active learning. The learning unit stores the inputted learning data and termination condition in a learning data storage unit. Although the low-order learning algorism is inputted together with the learning data and the termination condition, the algorism may be stored in advance in the learning data storage unit. The learning unit carries out a learning process by using the low-order learning algorism.

Also, Japanese Laid Open Patent Application (JP-P 2001-325272A) discloses an information arrangement method, an information processing device, a recording medium and a program transmitting device.

In the conventional technique, a selection is carried out in which a newly appearing word is highly weighted.

Also, Japanese Laid Open Patent Application (JP-P 2005-284348A) discloses an information processing device, an information processing method, a recording medium, and a program.

In the conventional technique, a weak discriminator is selected by using a weight of data, learning samples are discriminated by the selected weak discriminator, the discrimination results are weighted based on reliabilities to obtain values, and a standard value is calculated based on a cumulative sum of the values. A part of the learning samples are deleted based on the calculated standard value and the weight of data is calculated based on the non-deleted learning samples.

Also, Japanese Laid Open Patent Application (JP-P 2006-739718A) discloses a topic word combining method, a topic word combining and representative word extracting method, an apparatus, and program.

In the conventional technique, a document share degree can be calculated by using, in place of document numbers, weights indicating freshness such as date and time which are respectively possessed by documents. For example, the document share degree = (sum of freshness weights of respective sharing documents) / (sum of freshness weights of documents possessed by two corresponding topic words. When the date or time of the document is newer, the freshness weight affects the document share degree to be higher.

Furthermore, Japanese Laid Open Patent Application (JP-P 2006-185099A) discloses a probability model generating method.

In the conventional technique, learning data is a set of samples in which explanatory variables including one or more variables for explaining a predetermined event and non-explanatory variables which take values corresponding to the explanatory variables are paired. For each sample of the learning data, a probability corresponding to values of the non-explanatory variables is calculated based on a probability model prepared in advance. Weights are respectively calculated for the samples of the learning data based on the calculated probability. A new probability model is generated based on the calculated weights and the learning data, and stored in a model storage device. Furthermore, the probability model stored in the model storage device is used to calculate a probability of whether the event occurs or not with respect to input parameters having the same data format as the explanatory variables.

### Disclosure of Invention

An object of the present invention is to provide an active learning system which improves a learning efficiency by considering an acquisition order of learning data.

An active learning system according to the present invention includes a learning data storage unit, a control unit, a learning unit, a candidate data storage unit, a prediction unit, a candidate data selection unit, and a data updating unit. The learning data storage unit stores a group of known learning data of a plurality of pieces of learning data. A label representing presence or absence of worth to a user is set in the known learning data. The control unit sets a weight for each piece of known learning data of the group of known learning data such that the weight is large in proportion to an acquisition order of the piece of known learning data. Learning data of the group of known learning data, which is worth to the user, is referred to as positive example learning data and learning data of the group of known learning data, which is not worth to the user, is referred to as negative example learning data. The learning unit selects from the group of known learning data, selected known learning data for which the weight is largest and generates a rule to discriminate whether the positive example learning data or the negative example learning data with respect to the selected known learning data. The candidate data storage unit stores a group of candidate learning data as learning data of the plurality pieces of learning data other than the group of known learning data. The prediction unit applies the rule to a group of candidate learning data as learning data of the plurality of pieces of learning data other than the group of known learning data and predicts whether the positive example learning data or not with respect to the group of candidate learning data to generate a prediction result. The candidate data selection unit selects selected candidate learning data representing learning data to be an object of learning from the group of candidate learning data based on the prediction result. The data updating unit outputs the selected candidate learning data to an output device, sets the label inputted from an input device for the selected candidate learning data, eliminates the selected candidate learning data from the group of candidate learning data, and adds the selected candidate learning data as known learning data to the group of known learning data.

### Brief Description of Drawings

The above and other objects, advantages and features of the present invention will be more apparent from description of exemplary embodiments taken in conjunction with the accompanying drawings, in which:
Fig. 1 is a block diagram of an active learning system according to first and second exemplary embodiments of the present invention;
Fig. 2 is a block diagram of the active learning system according to the first exemplary embodiment of the present invention;
Fig. 3 shows an example of format of learning data treated in the present invention;
Fig. 4 shows an example of content of a rule storage unit;
Fig. 5 shows an example of a learning data set treated in the first exemplary embodiment of the present invention;
Fig. 6 is a flowchart illustrating an operation of the active learning system according to the first exemplary embodiment of the present invention;
Fig. 7 is a block diagram of the active learning system according to the second exemplary embodiment of the present invention; and
Fig. 8 is a flowchart illustrating an operation of the active learning system according to the second exemplary embodiment of the present invention.

### Best Mode for Carrying Out the Invention

An active learning system according to exemplary embodiments of the present invention will be describedbelow with reference to the accompanying drawings.

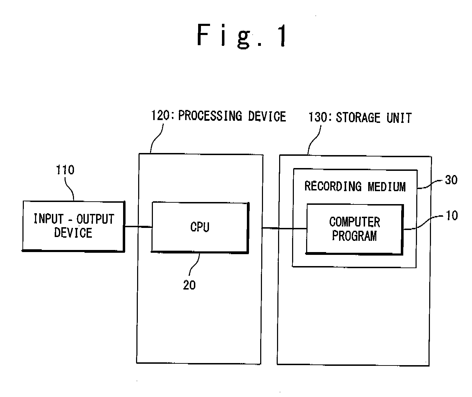

As shown in Fig. 1, an active learning system according to a first exemplary embodiment of the present invention includes an input-output device 110, a processing device 120 and a storage device 130.

The input-output device 110 includes an input device such as a keyboard and a mouse, and an output device such as an LCD and a printer. The storage device 130 includes a semiconductor memory, a magnetic disk or the like.

The processing device 120 is a computer and includes a CPU (Central Processing Unit) 20. The storage device 130 contains a recording medium 30 which records a computer program 10 to be executed by the computer. The CPU 20 reads the program 10 from the recording medium 30 and executes it at the startup of the computer, or the like.

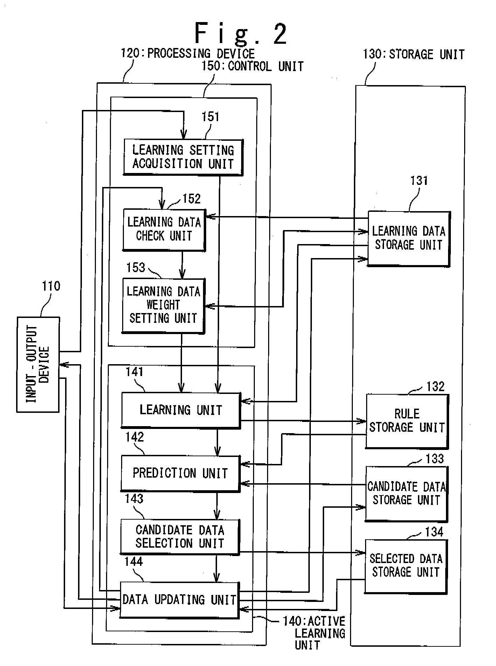

As shown in Fig. 2, the storage device 130 further includes learning data storage means (a learning data storage unit 131), rule storage means (a rule storage unit 132), candidate data storage means (candidate data storage unit 133) and selected data storage means (selected data storage unit 134).

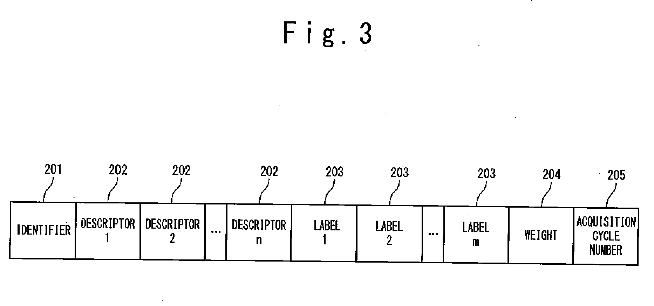

The learning data storage unit 131 stores a known learning data group. The known learning data group represents pieces of learning data in which values of labels are known (labels are set), among a plurality of pieces of learning data as a set of learning data. For example, as shown in Fig. 3, each piece of learning data of the known learning data group includes an identifier 201 for identifying the corresponding piece of learning data, a plurality of descriptors 202, a plurality of labels 203, a weight 204, and an acquisition cycle number 205. The descriptor 202 characterizes a structure and the like of the corresponding pieces of learning data. The label 203 indicates a state with respect to an event of the corresponding pieces of learning data and includes a class or a function value.

The label 203 represents presence or absence of worth to a user with respect to the event. A piece of learning data of the known learning data group, which is worth to the user, is referred to as "a positive example" (positive example learning data). A piece of learning data of the known learning data group, which is not worth to the user, is referred to as "a negative example" (negative example learning data).

The weight 204 takes, for example, a value from 0 to 1 and indicates higher importance when the value is closer to 1 (when the value is larger). At an initial time, the weights are set to be the same value. The acquisition cycle number 205 is information to acquire a significant index with respect to a generation of a rule with respect to a piece of learning data and records a number of cycle in which the piece of learning data is acquired. By the way, instead of being included respectively in the plurality of pieces of leaning data, the acquisition cycle numbers 205 may be stored in the learning data storage unit 131 with being associated with the plurality pieces of learning data.

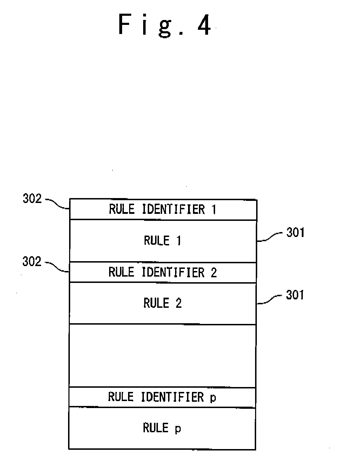

The rule storage unit 132 stores a group of rules which are respectively learned through, for example, a bagging method, by using the known learning data group stored in the learning data storage unit 131. As shown in Fig. 4, each rule of the rule group 301 includes a rule identifier 302 for identifying the rule and for distinguishing the rule from other rules. When the descriptors 202 of arbitrary piece of learning data is inputted, each rule 301 is employed to predict whether or not the piece of learning data represents the positive example which is worth to the user, namely, whether or not a value of a desired label is a desirable value. The rule 301 concerns a calculation of a score. The score is a numeral value representing a likelihood of the corresponding piece of learning data being the positive example, and takes a value from 0 to 1 for example. The score indicates a higher likelihood of being the positive example when the score is larger.

The candidate data storage unit 133 stores a candidate learning data group as an unknown learning data group. The unknown learning data group represents pieces of learning data of which values of labels are unknown (labels are not set), among the plurality of pieces of learning data. The candidate learning data group has, as same as the pieces of learning data stored in the learning data storage unit 131, the structure shown in Fig. 3. However, among the plurality of labels 203, labels (desired labels) for which learning is carried out are different in the following points: in the case of the known learning data group, the desired labels are known, namely, meaningful values are set for the desired labels, however, in the case of the candidate learning data group, the desired labels are unknown, namely, are not set.

The selected data storage unit 134 is a unit which stores selected candidate learning data. The selected candidate learning data is selected as a piece of learning data with respect to which the next learning is carried out, from the candidate learning data group stored in the candidate data storage unit 133 by the processing device 120.

The above computer program 10 includes an active learning unit 140 and a control unit 150.

The active learning unit 190 includes learning means (a learning unit 141), prediction means (a prediction unit 142), candidate data selection means (a candidate data selection unit 143) and data updating means (a data updating unit 144).

The learning unit 141 reads the known learning data group from the learning data storage unit 131 and selects a selected known learning data in which the weight 204 (which will be described below) is the largest, from the known learning data group. The selected known learning data represents leaning data newer than leaning data of the known learning data group other than the selected known learning data. The learning unit 141 generates (learns) a rule 301 for discriminating whether positive learning data or negative learning data with respect to the selected known learning data and stores the rule as the newest rule 301 in the rule storage unit 132.

The prediction unit 142 reads the newest rule 301 from the rule group 301 stored in the rule storage unit 132 and reads the candidate learning data group from the candidate data storage unit 133. The prediction unit 142 applies the read rule 301 to the candidate learning data group to predict whether positive example learning data or not with respect to the candidate learning data group. That is, the descriptor of each piece of data of the candidate learning data group is inputted to the rule 301 to calculate a score as a prediction result, which represents likelihood of being a positive example. The prediction unit 142 outputs the prediction result to the candidate data selection unit 143.

Based on the scores which are calculated as the prediction results for the respective pieces of candidate learning data, the candidate data selection unit 143 selects, from the candidate learning data group, selected candidate learning data which represents a piece of learning data as an object of the next learning. The candidate data selection unit 143 stores the selected candidate learning data in the selected data storage unit 134. As a method of selecting the selected candidate learning data, it is possible to use a method in which a sum or an average of scores are obtained for each piece of data of the candidate learning data group and the selection of the selected candidate learning data is carried out based on the descending order of the sum or the average of the scores, a method in which the selection is made by using a predetermined function as described in Japanese Laid Open Patent Application (JP-P 2005-107743A), or the like. Furthermore, it is also possible to apply another method such as a method in which a variance of the scores is obtained and a piece of candidate learning data for which scattered predictions are made is selected as the selected candidate learning data.

The data updating unit 144 reads the selected candidate learning data stored in the selected data storage unit 134 and outputs the data to the input-output device 110. At this time, the value of the label (the desired label) is inputted from the input-output device 110. The data updating unit 144 sets the label (the value of the label) for the selected candidate learning data, eliminates the selected candidate learning data from the candidate learning data group stored in the candidate data storage unit 133, and adds the selected candidate learning data as a piece of known learning data to the know learning data group stored in the learning data storage unit 131. When the known learning data is added to the learning data storage unit 131, a current active learning cycle number is recorded in the acquisition cycle number 205. The output of the selected candidate learning data with respect to which the next learning is carried out from the input-output device 110 may be the entire data structure shown in Fig. 3 or may be only the identifier 201. Also, the input of the value of the label from the input-output device 110 may be the entire data to which the value is inputted or may be a combination of the identifier 201, a label number and the value of the label. The label number is a number to specify one label among the plurality of labels. In this case, the data updating unit 144 retrieves the selected candidate learning data having the inputted identifier 201 from the selected data storage unit 134, registers the selected candidate learning data as a piece of known learning data in the learning data storage unit 131 after the input value is set for the label of the designated label number, and on the other hand, retrieves and deletes the selected candidate learning data having the inputted identifier 201 from the candidate data storage unit 133.

The control unit 150 includes learning setting acquisition means (a learning setting acquisition unit 151), learning data check means (a learning data check unit 152), and learning data weight setting means (a learning data weight setting unit 153).

The learning setting acquisition unit 151 acquires a learning condition including information (label with respect to which a learning is carried out and a value of the label when the label indicates a positive example) representing the desired label through the input-output device from the user or the like, and then the process proceeds to the learning unit 141 of the active learning unit 140.

The learning data check unit 152 checks the acquisition cycle numbers 205 stored in the learning data storage unit 131, and outputs the acquisition cycle numbers 205 to the learning data weight setting unit 153.

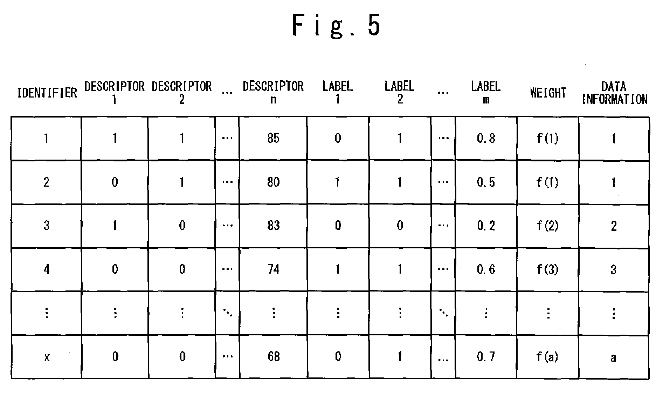

The learning data weight setting unit 153 reads the known learning data group from the learning data storage unit 131 and sets the weight 204 for each piece of data of the known learning data group such that the weight 204 is large in proportion to the acquisition order of the piece of data. Here, the weight 204 is a value (from 0.0 to 1.0) to carry out a learning in which the newly added known learning data of the known learning data group is taken to be more important than known learning data previously accumulated, and is determined based on the acquisition cycle number. As a method to set the weight, it is possible to use a method in which the weight is set by using a monotonically increasing function of the acquisition cycle number 205, or the like. The learning data weight setting unit 153 sets the weight 204 for each piece of data of the known learning data group based on the acquisition order in the known learning data group. At this time, for example, as shown in Fig. 5, a monotonically increasing function f (x) of the cycle number x is applied to the known learning data group. After the setting process of the weight by the learning data weight setting unit 153, the process proceeds to the learning unit 141 of the active learning unit 140.

In the process of the learning unit 141 and the following processes, the learning is carried out in a way that variation is given to importance based on the value of the weight 204 in the learning. In short, a piece of learning data having a larger weight 204 is taken to be more important than a piece of learning data having a smaller weight 204 in carrying out the learning.

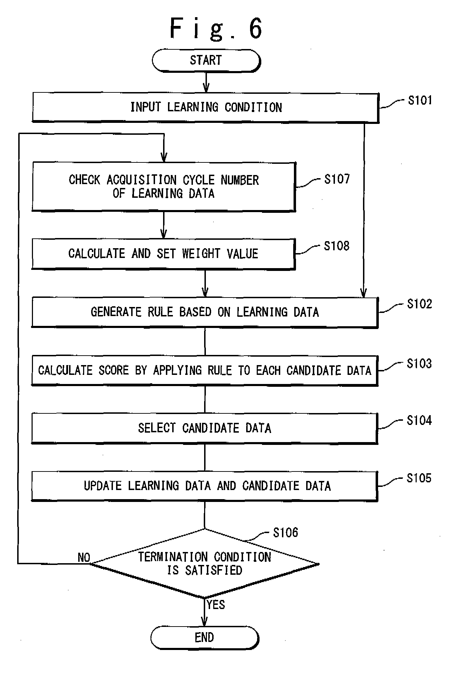

Next, with reference to Fig. 6, the operation according to the present exemplary embodiment will be described.

At the start of the active learning, the known learning data group is stored in the learning data storage unit 131 of the storage device 130 and the candidate learning data group is stored in the candidate data storage unit 133. The weights 204 in the known learning data group and the candidate learning data group are set to the same weight. Also, no rule is held in the rule storage unit 132, and no selected data is held in the selected data storage unit 134. When the processing device 120 starts up in this state, the process shown in Fig. 6 is started.

### (1) Step 5101

At first, the learning condition provided from the input-output device 110 is supplied to the learning setting acquisition unit 151 of the control unit 150. Then, the process proceeds to the learning unit 141.

### (2) Step S102

The learning unit 141 reads the known learning data group from the learning data storage unit 131 and selects the selected known learning data having the largest weight 204 from the known learning data group. The selected known learning data is learning data newer than learning data of the known leaning data group other than the selected known learning data. The learning unit 141 generates (learns) a rule 301 for discriminating whether positive learning data or negative learning data with respect to the selected known learning data and stores the rule as the newest rule 301 in the rule storage unit 132.

### (3) Step S103

The prediction unit 142 applies the newest rule 301 stored in the rule storage unit 132 to the candidate learning data group stored in the candidate data storage unit 133 and predicts whether positive example learning data or not with respect to the candidate learning data group. The prediction unit 142 outputs the prediction results to the candidate data selection unit 143.

### (4) Step S104

The candidate data selection unit 143 selects, based on the prediction results, selected candidate learning data which represents a piece of learning data as an object of the next learning from the candidate learning data group. The candidate data selection unit 143 stores the selected candidate learning data in the selected data storage unit 134.

### (5) Step 5105

The data updating unit 144 reads the selected candidate learning data stored in the selected data storage unit 134 and outputs the data to the input-output device 110. When the value of the label (the desired label) is inputted from the input-output device 110, the data updating unit 144 sets the label (the value of the label) for the selected candidate learning data. The data updating unit 144 eliminates the selected candidate learning data from the candidate learning data group stored in the candidate data storage unit 133 and adds the selected candidate learning data as a piece of known learning data to the known learning data group stored in the learning data storage unit 131. Then, one cycle of the active learning is terminated, and the process proceeds to the control unit 150.

### (6) Step S106

The control unit 150 judges whether or not a termination condition is satisfied and the process proceeds to the learning data check unit 152 when the termination condition is not satisfied. In this case, the known learning data which exists at the start of the learning and the known learning data which is added by the data updating unit 141 exist together in the learning data storage unit 131. The value of the desired label of the latter added known learning data is an actual value acquired through an experiment or investigation. On the other hand, when the termination condition is satisfied, the control unit 150 stops the repetition of the active learning cycle. The termination condition is provided from the input-output device 110, and the condition may be an arbitrary condition such as the maximum repetition number of the active learning cycle.

### (7) Step S107

The learning data check unit 152 checks the acquisition cycle numbers 205 stored in the learning data storage unit 131, and outputs the acquisition cycle numbers 205 to the learning data weight setting unit 153.

### (8) Step 5108

The learning data weight setting unit 153 reads the learning data from the learning data storage unit 131 and sets the weight 204 for each piece of data of the known learning data group such that the weight 204 is large in proportion to the acquisition order of the piece of data.

According to the active learning system according to the first exemplary embodiment of the present invention, it is possible to carry out the learning in which the newly added known learning data of the known learning data group is taken to be more important than the known learning data previously accumulated. This is because larger value is set for the weight 204 of a piece of known learning data acquired more newly and smaller value is set for the weight 204 of a piece of known learning data accumulated more previously. Consequently, the rule 301 is generated which reflects more strongly the newly acquired known learning data. Furthermore, a rule 301 is expected to be generated which is different in characteristic from rules 301 generated in previous cycles. When the rule 301 is applied to the selection of the known learning data with respect to which the next learning is carried out from the pieces of candidate learning data, there is provided a higher probability of inclusion of a larger number of various positive examples, as compared with the case of the learning in which difference is not given to the importance. In this way, according to the active learning system according to the first exemplary embodiment of the present invention, the efficiency in learning is improved by considering the order of acquisition of the known learning data.

Next, a second exemplary embodiment of the present invention will be described.

An active learning system according to the second exemplary embodiment of the present invention, as described below, is different from the second exemplary embodiment shown in Fig. 2 in the following points: the control unit 150 includes learning review means (a learning review unit 154) in place of the learning data check unit 152 and the learning data weight setting unit 153, and the storage device 130 further includes rule identifier storage means (a rule identifier storage unit 135).

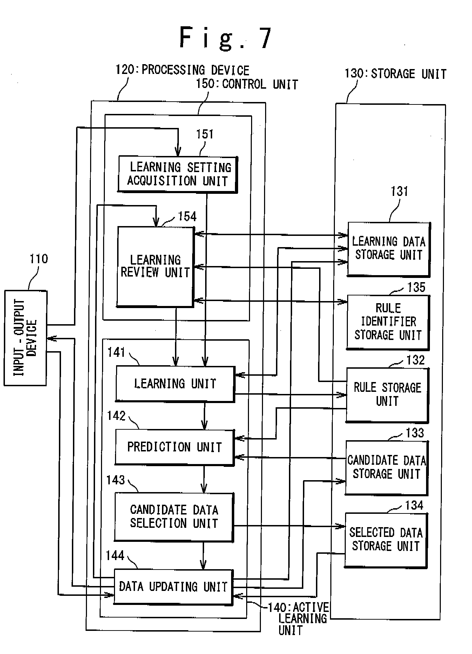

With reference to Fig. 7, the active learning system according to the second exemplary embodiment of the present invention includes, as same as the first exemplary embodiment shown in Fig. 2, the input-output device 110, the processing device 120 and the storage device 130. The processing device 120 includes the active learning unit 140 and the control unit 150.

Here, the storage device 130 includes the learning data storage unit 131, the rule storage unit 132, the candidate data storage unit 133, the selected data storage unit 134 and the rule identifier storage unit 135. The control unit 150 includes the learning setting acquisition unit 151 and the learning review unit 154. The second exemplary embodiment is same as the first exemplary embodiment shown in Fig. 2 in the other configurations.

The learning review unit 154 reads the known learning data group from the learning data storage unit 131 and reads from the rule storage unit 132, the rule group 301 as the rules 301 corresponding to the respective pieces of data of the known learning data group. The learning review unit 154 sets the weight 204 for each piece of data of the known learning data group such that the weight 204 is large in proportion to the acquisition order of the piece of data. The learning review unit 154 determines scores representing the numbers of the pieces of positive example learning data when the rule group 301 is applied to a positive example known learning data group representing pieces of positive example learning data of the known learning data group, based on the acquisition order in the rule group 301. The learning review unit 154 adjusts the weights 204 set for the respective pieces of data of the known learning data group, based on the scores. This will be described below.

The learning review unit 154 checks the rule with the results with respect to the known learning data added by the data updating unit 144 in the last cycle, namely, the most newly acquired known learning data and carries out a feedback to the learning data of a cycle one or more cycle before the last cycle, which is the cause of the generation of the rule. That is, a known learning data group in which the numbers of the last cycle are recorded as the acquisition cycle numbers 205 is retrieved from the known learning data group stored in the learning data storage unit 131.

When the retrieved known learning data group is the positive example known learning data group in which the desired labels 203 represent the positive example, the learning review unit 154 applies the rule group 301 stored in the rule storage unit 132 to the positive example known learning data group and calculates the importance. As for the calculation of the importance of each rule of the rule group 301, the scores are obtained which represent the numbers of pieces of the positive example learning data when the application is carried out to the positive example known learning data group, the maximum value or the average value of the scores may be determined as the importance. The learning review unit 154 selects the rule of the high importance as a selected rule 301 from the rule group 301 and stores the rule identifier 302 of the selected rule 301 as a selected rule identifier 302 in the rule identifier storage unit 135. When the value of the importance of the rule is equal to a certain threshold or more, when the value of the importance is in a predetermined top percentage of the calculated values, or when the rule is in a predetermined top percentage of the number of the rules, the importance can be judged to be high.

Next, the learning review unit 154 reads from the known learning data group stored in the learning data storage unit 131, pieces of the known learning data in which numbers equal to or less than the number of the cycle one cycle before the last cycle are stored as the acquisition cycle numbers 205, and for each piece of the known learning data, inputs its descriptor to the selected rule 301 and then calculates a score representing the likelihood of being the positive example.

The learning review unit 154 checks the calculated score with the desired label value. Then, as for the known learning data which is the positive example learning data of the known learning data group and for which the calculated score is higher than a predetermined score, the learning review unit 154 increases the weight 204 by a predetermined value. Also, as for the known learning data which is the positive example learning data and for which the calculated score is lower than the predetermined score, the learning review unit 154 reduces the weight 204 by a predetermined value. On the other hand, as for the known learning data which is the negative example learning data and for which the calculated score is lower than the predetermined score, the learning review unit 154 increases the weight 204 by a predetermined value. Also, as for the known learning data which is the negative example learning data and for which the calculated score is higher than the predetermined score, the learning review unit 154 reduces the weight 204 by a predetermined value. The value by which the weight is increased or reduced may be a constant or the value of the calculated score.

After the setting process of the weight by the learning review unit 154, the process proceeds to the learning unit 141 of the active learning unit 140.

In the process of the learning unit 141 and the following processes, learning is carried out in a way that variation is given to importance based on the value of the weight 204 of the learning. In short, a piece of learning data having a larger weight 204 is taken to be more important than a piece of learning data having a smaller weight 204 in carrying out the learning.

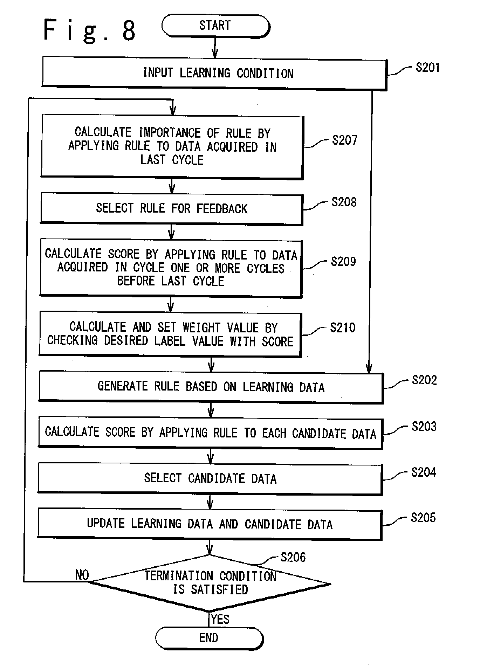

Witch reference to Fig. 8, the operation flow of the active learning system according to the present exemplary embodiment is different from the first exemplary embodiment shown in Fig. 5, in that steps S402 and S403 are replaced by steps S701 to S704, as described below.

The operation according to the present exemplary embodiment will be described below.

By the way, operations from the start to a step S206 in a first cycle of the present exemplary embodiment are the same as the operations from the start to the step S106 of the first exemplary embodiment.

### (1) Step S201

At first, the learning condition provided from the input-output device 110 is supplied to the learning setting acquisition unit 151 of the control unit 150. Then, the process proceeds to the learning unit 141.

### (2) Step 5202

The learning unit 141 reads the known learning data group from the learning data storage unit 131 and selects the selected known learning data having the largest weight 204 from the known learning data group. The selected known learning data represents learning data more correctly predicted than leaning data of the known leaning data group other than selected known learning data. The learning unit 141 generates (learns) a rule 301 for discriminating whether positive learning data or negative learning data with respect to the selected known learning data and stores the rule as the newest rule 301 in the rule storage unit 132.

### (3) Step 5203

The prediction unit 142 applies the newest rule 301 stored in the rule storage unit 132 to the candidate learning data group stored in the candidate data storage unit 133 and predicts whether positive example learning data or not with respect to the candidate learning data group. The prediction unit 142 outputs the prediction results to the candidate data selection unit 143.

### (4) Step S204

The candidate data selection unit 143 selects, based on the prediction results, selected candidate learning data which represents a piece of learning data as an object of the next learning from the candidate learning data group. The candidate data selection unit 143 stores the selected candidate learning data in the selected data storage unit 134.

### (5) Step S205

The data updating unit 144 reads the selected candidate learning data stored in the selected data storage unit 134 and outputs the data to the input-output device 110. When the value of the label (the desired label) is inputted from the input-output device 110, the data updating unit 144 sets the label (the value of the label) for the selected candidate learning data. The data updating unit 144 eliminates the selected candidate learning data from the candidate learning data group stored in the candidate data storage unit 133 and adds the selected candidate learning data as a piece of known learning data to the known learning data group stored in the learning data storage unit 131. Then, one cycle of the active learning is terminated, and the process proceeds to the control unit 150.

### (6) Step S206

The control unit 150 judges whether or not a termination condition is satisfied and the process proceeds to the learning review unit 154 when the termination condition is not satisfied. In this case, the known learning data which exists at the start of the learning and the known learning data which is added by the data updating unit 141 exist together in the learning data storage unit 131. The value of the desired label of the latter added known learning data is an actual value acquired through an experiment or investigation. On the other hand, when the termination condition is satisfied, the control unit 150 stops the repetition of the active learning cycle. The termination condition is provided from the input-output device 110, and the condition may be an arbitrary condition such as the maximum repetition number of the active learning cycle.

### (7) Step S207

The learning review unit 154 retrieves from the known learning data group stored in the learning data storage unit 131, a known learning data group in which the numbers of the last cycle are recorded as the acquisition cycle numbers 205. When the retrieved known learning data group is the positive example known learning data group in which the desired labels 203 represent the positive example, the learning review unit 154 applies the rule group 301 stored in the rule storage unit 132 to the positive example known learning data group and calculates the importance.

### (8) Step S208

Next, the learning review unit 154 selects the rule of high importance as a selected rule 301 from the rule group 301 and stores the rule identifier 302 of the selected rule 301 as a selected rule identifier 302 in the rule identifier storage unit 135.

### (9) Step S209

Next, the learning review unit 154 reads from the known learning data group stored in the learning data storage unit 131, pieces of the known learning data in which numbers equal to or less than the number of the cycle one cycle before the last cycle are stored as the acquisition cycle numbers 205, and for each piece of the known learning data, inputs its descriptor to the selected rule 301 and then calculates a score representing the likelihood of being the positive example.

### (10) Step S210

The learning review unit 154 checks the calculated score with the desired label value. Then, as for the known learning data which is the positive example learning data of the known learning data group and for which the calculated score is higher than a predetermined score, the learning review unit 154 increases the weight 204 by a predetermined value. Also, as for the known learning data which is the positive example learning data and for which the calculated score is lower than the predetermined score, the learning review unit 154 reduces the weight 204 by a predetermined value. On the other hand, as for the known learning data which is the negative example learning data and for which the calculated score is lower than the predetermined score, the learning review unit 154 increases the weight 204 by a predetermined value. Also, as for the known learning data which is the negative example learning data and for which the calculated score is higher than the predetermined score, the learning review unit 154 reduces the weight 204 by a predetermined value. Then, the process proceeds to the active learning unit 140.

The process of the learning unit 141 and the following processes are the same as the first exemplary embodiment. After the termination of one cycle of the active learning by the active learning unit 140, the process again proceeds to the control unit 150.

By the way, by using a computer program describing the operation (the active learning method) of the first or second exemplary embodiment, it is possible to cause various computers to execute the operation of the active learning method according to the present invention.

According to the active learning system according to the second exemplary embodiment of the present invention, a function is provided which feeds back the positive example data acquired in the last cycle to the rule in every cycle of the active learning. Thus, with respect to the rule effective to acquire the positive examples, the weight is increased for the learning data which is the positive example and is correctly predicted to seem to be the positive example, and the weight is decreased for the learning data which is the positive example and is mistakenly predicted not to seem to be the positive example. On the other hand, the weight is increased for the learning data which is the negative example and is correctly predicted not to seem to be the positive example, and the weight is decreased for the learning data which is the negative example and is mistakenly predicted to seem to be the positive example. As a result, at the learning in the nest cycle, it is expected to execute the learning reflecting the rule based on which the positive example is acquired in the last cycle. Furthermore, even when only a very small number of positive examples are newly acquired, it is expected to generate a rule by taking the very small number of positive examples to be important, instead of generating a rule which strongly reflects the data previously accumulated. In a case of the learning with the feedback function with respect to the rule, there is provided a higher probability of the inclusion of a larger number of various positive examples, as compared with a case of the learning without the feedback function with respect to the rule. In this way, according to the active learning system according to the second exemplary embodiment of the present invention, the efficiency in learning is improved by considering the order of acquisition of the known learning data.

Next, an exemplary variation of the second exemplary embodiment will be described.

As mentioned above, the learning review unit 154 reads the known learning data group from the learning data storage unit 131 and reads from the rule storage unit 132, the rule group 301 as the rules 301 corresponding to the respective pieces of data of the known learning data group. The learning review unit 154 sets the weight 204 for each piece of data of the known learning data group such that the weight 204 is large in proportion to the acquisition order of the piece of data. The learning review unit 154 determines scores representing the numbers of the pieces of positive example learning data when the rule group 301 is applied to a positive example known learning data group representing pieces of positive example learning data of the known learning data group, based on the acquisition order in the rule group 301. The learning review unit 154 adjusts the weights 204 set for the respective pieces of data of the known learning data group, based on the scores. That is, the rule group 301 stored in the rule storage unit 132 is applied only to the pieces of learning data in which the desired labels 203 indicate the positive example, in the known learning data group.

On the other hand, according to the exemplary variation, the learning review unit 154 determines scores representing the numbers of the pieces of positive example learning data when the rule group 301 is applied to the known learning data group, based on the acquisition order in the rule group 301. The learning review unit 154 adjusts the weights 204 set for the respective pieces of data of the known learning data group, based on the scores. That is, the rule group 301 is applied to not only the learning data in which the desired label 203 indicates the positive example but also the learning data in which the desired label 203 indicates the negative example, in the known learning data group. In the case of the positive example, the calculated score is reflected as itself on the importance of the rule. However, in the case of the negative example, for example, when the score takes a value from 0 to 1 and the score closer to 1 indicates a higher possibility of the positive example, a value obtained by subtracting the calculated score from 1 is defined as a positive example score. The importance of each rule of the rule group 301 is calculated based on the score thus calculated.

According to the exemplary variation of the present exemplary embodiment, a function is provided which feeds back not only the positive example learning data acquired in the last cycle but also the negative example learning data to the rule in every cycle of the active learning. Thus, a learning of an excellent ability of grouping of the newly acquired learning data is expected to be executed in the next cycle. In a case of the learning with the feedback function with respect to the rule, there is provided a higher probability of the inclusion of a larger number of various positive examples, as compared with a case of the learning without feedback function with respect to the rule. In this way, according to the active learning system according to the second exemplary embodiment of the present invention, the efficiency in learning is improved by considering the order of acquisition of the known learning data.

Although the present invention has been described above with reference to several exemplary embodiments, the present invention is not limited to the above exemplary embodiments. Modifications understandable to those skilled in the art may be applied to the configuration or details of the present invention, within the scope of the present invention.

The active learning system and method according to the present invention can be applied to a purpose of data mining to select pieces of data desired by a user from many pieces of candidate data, for example, a purpose of searching active compounds in a drug screening.

## Claims

1. An active learning system comprising:
learning data storage means for storing a group of known learning data of a plurality of pieces of learning data, wherein a label representing presence or absence of worth to a user is set in said known learning data;
control means for setting a weight for each piece of learning data of said group of known learning data such that said weight is large in proportion to an acquisition order of said each piece of known learning data, wherein learning data of said group of known learning data, which is worth to said user, is referred to as positive example learning data and learning data of said group of known learning data, which is not worth to said user, is referred to as negative example learning data;
learning means for selecting from said group of known learning data group, selected known learning data for which said weight is largest and for generating a rule to discriminate whether said positive example learning data or said negative example learning data with respect to said selected known leaning data;
candidate data storage means for storing a group of candidate learning data as learning data of saidplurality of learning data other than said group of known learning data;
prediction means for applying said rule to a group of candidate learning data as learning data of said plurality pieces of learning data other than said group of known learning data and for predicting whether said positive example learning data or not with respect to said group of candidate learning data to generate a prediction result;
candidate data selection means for selecting selected candidate learning data representing learning data to be an obj ect of learning from said group of candidate learning data based on said prediction result; and
data updating means for outputting said selected candidate learning data to an output device, for setting said label inputted from an input device for said selected candidate learning data, for eliminating said selected candidate learning data from said group of candidate learning data, and for adding said selected candidate learning data as known learning data to said group of known learning data.

2. The active learning system according to claim 1, wherein said learning data storage means further stores an acquisition cycle number, and
said control means includes
learning data weight setting means for determining said weight based on said acquisition cycle number and for setting said weight for each piece of known learning data of said group of known learning data based on an acquisition order in said group of known learning data.

3. The active learning system according to claim 1, wherein said selected known learning data represents learning data newer than learning data of said group of known learning data other than said selected known learning data.

4. The active learning system according to claim 1, further comprising
rule storage means for storing said rule corresponding to each piece of known learning data of said group of known learning data as a rule group, and
wherein said learning data storage means further stores an acquisition cycle number, and
said control means includes
learning review means for determining said weight based on said acquisition cycle number, for setting said weight for each piece of known learning data of said group of known learning data, for determining a score representing a number of pieces of said positive example learning data based on an acquisition order in said rule group in a case that said rule group is applied to said group of known learning data, and for adjusting said weight set for each piece of known learning data of said group of known learning data based on said score.

5. The active learning system according to claim 4, wherein said selected known learning data represents learning data more correctly predicted than leaning data of said group of known learning data other than said selected known learning data.

6. The active learning system according to claim 4, wherein said learning review means determines said score representing a number of pieces of said positive example learning data based on an acquisition order in said rule group in a case that said rule group is applied to a positive example known learning data group representing said positive example learning data of said group of known learning data, and adjusts said weight set for each piece of known learning data of said group of known learning data group, based on said score.

7. An active learning method comprising:
a step for storing in learning data storage means, a group of known learning data of a plurality of pieces of learning data, wherein a label representing presence or absence of worth to a user is set in said known learning data;
a step for setting a weight for each piece of known leaning data of said group of known learning data such that said weight is large in proportion to an acquisition order of said each piece of known learning data, wherein learning data of said group of known learning data, which is worth to said user, is referred to as positive example learning data and learning data of said group of known learning data, which is not worth to said user, is referred to as negative example learning data;
steps for selecting from said group of known learning data, selected known learning data for which said weight is largest and for generating a rule to discriminate whether saidpositive example learning data or said negative example learning data with respect to said selected known learning data;
a step for storing in candidate data storage means, a group of candidate learning data as leaning data of said plurality of pieces of learning data other than said group of known learning data;
steps for applying said rule to a group of candidate learning data as learning data of said plurality of pieces of learning data other than said group of known learning data and for predicting whether said positive example learning data or not with respect to said group of candidate learning data to generate a prediction result;
a step for selecting selected candidate learning data representing learning data to be an object of learning from said group of candidate learning data based on said prediction result; and
steps for outputting said selected candidate learning data to an output device, for setting said label inputted from an input device for said selected candidate learning data, for eliminating said selected candidate learning data from said group of candidate learning data, and for adding said selected candidate learning data as known learning data to said group of known learning data.

8. The active learning method according to claim 7, wherein said step for storing in said learning data storage means includes
a step for further storing in said leaning data storage means, an acquisition cycle number, and
said step for setting said weight includes
steps for determining said weight based on said acquisition cycle number and for setting said weight for each piece of known learning data of said group of known learning data based on an acquisition order in said group of known learning data.

9. The active learning method according to claim 7, wherein said selected known learning data represents learning data newer than learning data of said group of known learning data other than said selected known learning data.

10. The active learning method according to claim 7, further comprising
a step for storing said rule corresponding to each piece of known learning data of said group of known learning data as a rule group, and
wherein said step for storing in said learning data storage means includes
a step for further storing an acquisition cycle number in said learning data storage means, and
said step for setting said weight includes
steps for determining said weight based on said acquisition cycle number, for setting said weight for each piece of known learning data of said group of known learning data, for determining a score representing a number of pieces of said positive example learning data based on an acquisition order in said rule group in a case that said rule group is applied to said group of known learning data, and for adjusting said weight set for each piece of learning data of said group of known learning data based on said score.

11. The active learning method according to claim 10, wherein said selected known learning data is learning data more correctly predicted than learning data of said group of known learning data other than said selected known learning data.

12. The active learning method according to claim 10, wherein said step for adjusting said weight include
steps for determining said score representing a number of pieces of said positive example learning data based on an acquisition order in said rule group in a case that said rule group is applied to a positive example known learning data group representing said positive example learning data of said group of known learning data, and for adjusting said weight set for each piece of known learning data of said group of known learning data based on said score.

13. A recording medium on which a computer program readable to a computer is recorded, the computer program causes the computer to execute:
a step for storing in learning data storage means, a group of known learning data of a plurality of pieces of learning data, wherein a label representing presence or absence of worth to a user is set in said known learning data;
a step for setting a weight for each piece of known leaning data of said group of known learning data such that said weight is large in proportion to an acquisition order of said each piece of known learning data, wherein learning data of said group of known learning data, which is worth to said user, is referred to as positive example learning data and learning data of said group of known learning data, which is not worth to said user, is referred to as negative example learning data;
steps for selecting from said group of known learning data, selected known learning data for which said weight is largest and for generating a rule to discriminate whether said positive example learning data or said negative example learning data with respect to said selected known learning data;
a step for storing in candidate data storage means, a group of candidate learning data as leaning data of said plurality of pieces of learning data other than said group of known learning data;
steps for applying said rule to a group of candidate learning data as learning data of said plurality of pieces of learning data other than said group of known learning data and for predicting whether said positive example learning data or not with respect to said group of candidate learning data to generate a prediction result;
a step for selecting selected candidate learning data representing learning data to be an object of learning from said group of candidate learning data based on said prediction result; and
steps for out putting said selected candidate learning data to an output device, for setting said label inputted from an input device for said selected candidate learning data, for eliminating said selected candidate learning data from said group of candidate learning data, and for adding said selected candidate learning data as known learning data to said group of known learning data.

14. The recording medium according to claim 13, wherein said step for storing in said learning data storage means includes
a step for further storing in said leaning data storage means, an acquisition cycle number, and
said step for setting said weight includes
steps for determining said weight based on said acquisition cycle number and for setting said weight for each piece of known learning data of said group of known learning data based on an acquisition order in said group of known learning data.

15. The recording medium according to claim 13, wherein said selected known learning data represents learning data newer than learning data of said group of known learning data other than said selected known learning data.

16. The recording medium according to claim 13, wherein the computer program further causes the computer to execute
a step for storing said rule corresponding to each piece of known learning data of said group of known learning data as a rule group, and
wherein said step for storing in said learning data storage means includes
a step for further storing an acquisition cycle number in said learning data storage means, and
said step for setting said weight includes
steps for determining said weight based on said acquisition cycle number, for setting said weight for each piece of known learning data of said group of known learning data, for determining a score representing a number of pieces of said positive example learning data based on an acquisition order in said rule group in a case that said rule group is applied to said group of known learning data, and for adjusting said weight set for each piece of learning data of said group of known learning data based on said score.

17. The recording medium according to claim 16, wherein said selected known learning data is learning data more correctly predicted than leaning data of said group of known learning data other than said selected known learning data.

18. The recording medium according to claim 16, wherein said step for adjusting said weight include
steps for determining said score representing a number of pieces of said positive example learning data based on an acquisition order in said rule group in a case that said rule group is applied to a positive example known learning data grouprepresentingsaid positiveexamplelearning data of said group of known leaning data, and for adjusting said weight set for each piece of known learning data of said group of known learning data based on said score.
